# EUROPEAN PATENT APPLICATION

(11) **EP 4 556 304 A1**
(43) Date of publication of application: **21.05.2025**
(21) Application number: 23209841.8
(22) Date of filing: 14.11.2023
(51) Int. Cl.: B60N 2/02, B60N 2/06, B60N 2/42, B60N 2/427

(54) **A LOAD ABSORPTION DEVICE TO BE USED WITH A VEHICLE SEAT, A VEHICLE OCCUPANT PROTECTION SYSTEM USING SUCH DEVICE AND A METHOD OF OPERATING A SYSTEM**

(71) Applicant: Autoliv Development AB, 447 83 Vårgårda (SE)
(72) Inventor: Rydsmo, Erik, 447 83 Vårgårda (SE); Andersson, Mikael, 447 83 Vårgårda (SE); Dahlgren, Mikael, 447 83 Vårgårda (SE)
(74) Representative: AWA Sweden AB

(57) **Abstract**

A load absorption device to be used with a vehicle seat is provided. The device comprises a rail arrangement comprising an upper rail (1) configured to be connected to a lower side of the vehicle seat and a lower rail (2) configured to be fixedly connected to a top surface of a vehicle floor. The upper and the lower rails (1, 2) are slidingly connected to each other to allow a longitudinal mutual displacement between the upper rail (1) and the lower rail (2). The device further comprises a strip (3) having first leg (15A) having a first end (16A), a second leg (15B) having a second end (16B), and a curved portion (15C) intermediate the first and second legs. The first end (16A) is fixedly connected to the lower rail (2) and the second end (16B) is fixedly connected to the upper rail (1). The curved portion (15C) is configured to translate in the same direction as the upper rail (1) during a mutual displacement between the upper rail (1) and the lower rail (2). Further a vehicle occupant protection system (1000) and a method of operating such system is provided.

## Description

### Technical field

The present invention refers to a load absorption device to be used with a vehicle seat, a vehicle occupant protection system using such device, and a method of operating a vehicle occupant protection system in a vehicle.

### Technical background

In recent years, automation in vehicle operations has significantly increased. Whereas historically, a driver of a vehicle was tasked with the complete operation of a vehicle in order to drive the vehicle, more and more electronic systems included in modern vehicles assist the driver while operating the vehicle or even relief the driver completely off by providing an autonomous vehicle operation. In some situations, a driver is even superfluous. In such a scenario the driver may assume a seating position which is different from a conventional driving seating position required for the direct operation of the vehicle by the driver. This development allows the driver to assume a more rearward seating position and also a more reclined position. The driver may even lay down. This applies already to the other occupants. A more reclined position does however cause problems in the event the vehicle should be subjected to an accident where a conventionally seated and belted person would be protected by the seatbelt and by one or more airbags.

Accordingly, a reclined seating position can introduce potentially unfavorable interactions between the seated person and the surrounding restraint systems, i.e., the lap belt and the seat pan. Examples of unfavorable interactions that can be seen in a fully reclined position are high head accelerations and neck extensions due to the absence of head restraining airbags. Another example is an increased risk of submarining. Further, there are increased spine forces and increased accelerations where the pelvis area contacts the seat pan. The latter results in an overall increased risk of pelvis and lumbar fractures. Research has found that one way to reduce the loads to the pelvis and lumbar spine, is to introduce a load limiting system to the seat that acts in the x- and/or z-directions of the vehicle.

### Summary

It is an object of the present invention to provide a load absorption device to be used with a vehicle seat.

The load absorption device should be adaptive to different external parameters, such as vehicle speed, inclination of the seat back and weight of the occupant.

The load absorption device should allow an easy adaption to different vehicle types, intended use of the vehicle, type of seat in the vehicle and different seat designs.

These and other objects that will be apparent from the following summary and description are achieved by a load absorption device according to the appended claims.

According to one aspect of the present invention, there is provided a load absorption device to be used with a vehicle seat, the device comprising:
a rail arrangement comprising an upper rail configured to be connected to a lower side of the vehicle seat, and a lower rail configured to be fixedly connected to a top surface of a vehicle floor; wherein the upper and the lower rails are slidingly connected to each other to allow a longitudinal mutual displacement between the upper rail and the lower rail; and
a strip having first leg having a first end, a second leg having a second end, and a curved portion intermediate the first and second legs, wherein the first end is fixedly connected to the lower rail and the second end is fixedly connected to the upper rail; wherein
the curved portion is configured to translate in the same direction as the upper rail during a mutual displacement between the upper rail and the lower rail.

Accordingly, a load absorption device is provided in which the energy is absorbed by causing a deformation of a strip which is arranged in a limited interspace between two parallel rails. The upper and lower rails are caused to be mutually displaced as a result of the inertial energy of the seat and/or a seated occupant in the event of a crash where the occupant is caused to move in the forward direction. The strip is oriented between the two rails so that the curved portion is configured to translate along the strip in the same direction as the upper rail during a mutual displacement between the upper rail and the lower rail. This means that the two fixed ends of the strip will be forced towards each other by a linear movement. During this translation, the relative lengths of the first and second legs will be changed, i.e. one leg will be shorter while the other leg will be longer. There will however be substantially no elongation of the strip as such. Also, the radius in the curved portion will be substantially the same during the whole translation. This allows for an efficient energy absorption of the inertial energy from the seat and the seated occupant during a crash. When used in a vehicle seat, there will be a reduced risk of submarining and also a reduced force to the spine and pelvis area.

The properties of the strip may be adapted during the design phase of the vehicle depending on parameters such as type of vehicle, type of seats in the vehicle, expected seating position during normal use, and expected weight of the average seat occupant. Non-limiting examples of properties of the strip that may be adapted are the type of material in the strip, such as tensile strength, and the cross-sectional area of the strip as seen transverse its longitudinal extension. Accordingly, all seats in one and the same vehicle may be provided with a load absorption device, but the individual devices may be equipped with different strip designs.

A convex portion of the curved portion may constitute a leading edge during the mutual displacement between the upper rail and the lower rail.

The first leg or the second leg may along its longitudinal extension comprise a tapered portion tapering in a direction towards the curved portion.

By the tapered portion, the energy consumption, and hence the load absorption effect, will increase progressively as the curved portion is forced to translate along the tapered longitudinal extension of a leg of the strip towards a relatively wider portion of the strip, i.e., towards a larger cross-sectional area of the strip. In other words, as the cross-sectional area of the strip progressively increases, the more energy is required to reshape the strip during the translation of the curved portion.

The tapering angle may be adapted in the design phase of the vehicle depending on the expected use of the energy absorption device. The larger tapering angle, the more progressive load absorption. Hence, the strip may be provided with a desired load absorption profile that is adapted to a specific design criterion. As a non-limiting example to exemplify the principle: a low tapering angle, e.g., 1-10 degrees may be favorable in applications where a crash involves relatively low inertial forces, or where the weight of the expected seat occupant is relatively low, such as child. Correspondingly, a higher tapering angle, e.g. 10-30 degrees may be favorable in applications where a crash involves relatively high inertial forces, or where the weight of the expected seat occupant corresponds to a 50 percentile adult. By providing the strip with two subsequent tapered portions with different angles, a strip may be provided that can meet both situations.

The tapered portion is preferably arranged adjacent the curved portion as seen in a normal operation condition of the load absorption device. The *"normal operation condition"* should in the context of the invention be understood as in a condition when the load absorption device is not subjected to a crash.

The tapered portion may have the same tapering along two opposing longitudinally extending edge portions of the strip. Hence, the tapering may be symmetric along the opposing sides.

The tapered portion may have a progressively increasing cross sectional area. The tapered portion may have a straight-linear longitudinal extension. The skilled person realizes that other geometries may be used, such as a single-curved longitudinal extension. The single-curved extension is preferably concave as seen in view of a longitudinal centerline of the strip. In yet another embodiment, the strip may have a step-shaped configuration with a progressively increased cross sectional area along the longitudinal extension of the strip.

The tapered portion may have a first tapered portion with a first tapering angle in view of a longitudinal centerline of the strip, and a second tapered portion with a second tapering angle in view of the longitudinal centerline of the strip, wherein the second tapering angle is larger than the first tapering angle.

The tapering angle may be adapted in the design phase of the vehicle depending on the expected use of the energy absorption device. The larger tapering angle, the more progressive load absorption. Hence, the strip may be provided with a desired load absorption profile that is adapted to a specific design criterion. As a non-limiting example to exemplify the principle: a low tapering angle, e.g., 1-10 degrees may be favorable in applications where a crash involves relatively low inertial forces, or where the weight of the expected seat occupant is relatively low, such as child. Correspondingly, a higher tapering angle, e.g., 10-30 degrees may be favorable in applications where a crash involves relatively high inertial forces, or where the weight of the expected seat occupant corresponds to a 50 percentile adult. By providing the strip with two subsequent tapered portions with different angles, a strip may be provided that can meet both situations.

The load absorption device may further comprise a locking arrangement that is configured to selectively interlock the upper and the lower rails. The locking arrangement may comprise an electromechanical unlocking element, an electromagnetic unlocking element, or a pyrotechnical unlocking element. The locking arrangement may be in the form of a locking pin that engages the upper and lower rails and which is pulled/pushed out of locking engagement by means of the unlocking element.

The locking arrangement may be configured to communicate with an ECU (Electrical Control Unit) of the vehicle. The locking arrangement is preferably as a default set to a locked position during the normal operation of the vehicle. The rails are thereby prevented from a mutual displacement during the normal operation of the vehicle. In the event a processor of the ECU, based on signals from a crash sensor element determines that there is an imminent or an ongoing vehicle crash, and that a seating position sensor element indicates that the seating is set to a certain position where there is a risk for a submarining, the ECU will instruct the locking arrangement to unlock. Thereby the rails will be allowed to be mutually displaced to thereby allow a load absorption by the strip. Another parameter that may be used as input to the ECU to determine if the locking arrangement should be unlocked or not is the speed of the vehicle. If the speed is below a certain threshold value, the loads from the accident will thereby be handled by other safety systems in the vehicle.

According to another aspect of the invention a vehicle occupant protection system is provided. The vehicle occupant protection system comprises:
a vehicle seat configured to accommodate an occupant;
a load absorption device according to any of claims 1-8, wherein the rail arrangement is configured to connect the vehicle seat to a vehicle floor;
a locking arrangement configured to selectively lock the vehicle seat in a defined seating position to prevent mutual displacement between the rails in the rail arrangement when locked and to allow displacement between the rails in the rail arrangement when unlocked;
a crash sensor element adapted for determining an imminent or ongoing vehicle crash; and
a seating position sensor element adapted for determining a seating position; wherein, upon the determination that the rails in the rail arrangement are displaced to a position where the seat is set in a rearward seating position and the occurrence of an imminent or ongoing vehicle crash, the locking arrangement is configured to be unlocked, to thereby allow a mutual displacement between the rails and thereby allow the seat to be slid from the rearward seating position towards a conventional driving seating position; and
whereby the sliding of the seat from the rearward seating position towards the conventional driving seating position is performed by using inertial energy from the vehicle crash while the strip is forced to deform and thereby absorb inertial energy of the seat and/or a seated occupant.

In the context of the present invention, the term *"conventional driving seating position"* is to be understood as the intended normal seating position for which a seatbelt system and an airbag system in the vehicle is designed.

The design and functionality of the load absorption device as such has been thoroughly described above. The design and functionality are equally applicable to a vehicle occupant protection system using such device. Hence, to avoid undue repetition, reference is made to the sections above discussing the device.

According to yet another aspect, the invention refers to a method of operating a vehicle occupant protection system in a vehicle, where the vehicle comprises: a seat for accommodating an occupant, wherein the seat is slidably connected with the vehicle by a load absorption device according to any of claims 1-8, and wherein a locking arrangement is provided which is configured to selectively lock the vehicle seat in a defined seating position to prevent mutual displacement between the rails in the rail arrangement when locked and to allow displacement between the rails in the rail arrangement when unlocked. The method comprises:
determining, by using a crash sensor element, an imminent or ongoing vehicle crash;
determining, by using a seating position sensor element, a seating position;
upon the determination of the seat being in a rearward seating position and the occurrence of an imminent or ongoing vehicle crash:
   unlocking the locking arrangement to allow the sliding of the seat from the rearward seating position towards a conventional driving seating position, and using inertial energy from the vehicle crash to slide the seat from the rearward seating position towards the conventional driving seating position while inertial energy of the seat and/or a seated occupant is absorbed by a deformation of the strip in the load absorption device.

The design and functionality of the load absorption device as such has been thoroughly described above. The design and functionality are equally applicable to the method of operating a vehicle occupant protection system which uses such device. Hence, to avoid undue repetition, reference is made to the sections above discussing the device.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses the components that are part of the energy absorption device to be used with a vehicle seat.
Fig. 2 discloses one embodiment of the strip.
Fig. 3 discloses the energy absorption device in an assembled condition.
Fig. 4 discloses highly schematically the energy absorption device in combination with a vehicle seat.
Figs. 5A and 5B schematically disclose the operation of the energy absorption device in its activated but not yet displaced condition.
Figs. 6A and 6B schematically disclose the operation of the energy absorption device in a condition where the energy absorption has been initiated.
Figs. 7A and 7B schematically disclose the operation of the energy absorption device after completed energy absorption.
Figs. 8A and 8B schematically disclose the absorbed force as a function of the mutual displacement between the upper and lower rails and thereby the deformation of the strip.
Fig. 9 schematically illustrates the method of operating a system using such device.

### Detailed description

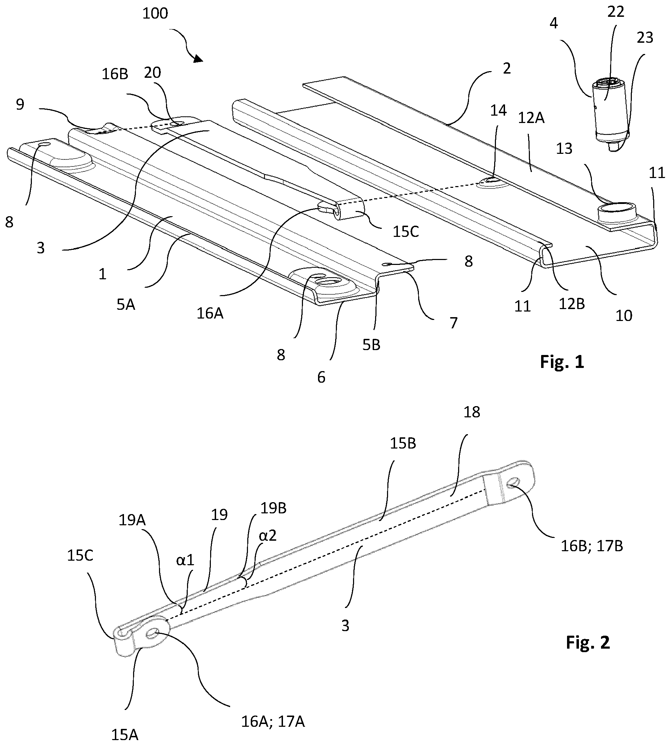

Now turning to Fig. 1, the overall design of a load absorption device 100 to be used with a vehicle seat is shown as an exploded view. The device 100 comprises a rail arrangement in the form of an upper rail 1, a lower rail 2, a strip 3 and a locking arrangement 4 that is configured to selectively interlock the upper rail 1 and the lower rail 2. The upper rail 1 is configured to be slidingly received in and along the lower rail 2.

The upper rail 1 comprises a U-shaped cross-sectional profile with two opposing vertical side walls 5A, 5B merging with an intermediate bottom wall 6. One of the side walls 5B merges with a strip-supporting flange 7 that extends substantially in parallel with the bottom wall 6 and outwardly away from the U-shaped cross-sectional profile. The bottom wall 6 comprises a pattern of throughgoing holes 8 allowing the upper rail 1 to be fixedly mounted to rails of a seat frame.

The strip-supporting flange 7 has a width that is slightly smaller than the width of a wider flange of the lower rail 2 that will be described below. The strip-supporting flange 7 comprises a through-going hole 8 in a first end thereof. The hole 8 is configured to lockingly engage the locking arrangement 4 in a manner to be described below. The strip-supporting flange 7 comprises a depression 9 with a through-going hole 9 in a second end thereof. The depression 9 provides a support to one end of the strip 3 in a condition when the strip 3 is mounted between the upper rail 1 and the lower rail 2. The upper rail 1 is preferably formed by pressed sheet metal.

The lower rail 2 comprises a C-shaped profile having a flat bottom wall 10 and two L-shaped side walls 11 extending from the bottom wall 10. The two L-shaped side walls 11 thereby form a respective flange 12A, 12B that extends in parallel with the bottom wall 10. One of the two flanges 12A, 12B is disclosed as being wider than the other flange. The skilled person realizes that the flanges may have the same width. One of the flanges, in the disclosed embodiment, the wider flange 12A, comprises in a first end thereof a through-going opening 13 with a neck portion extending away from the bottom wall 10. The through-going opening 13 is configured to support the locking arrangement 4 in a manner to be described below.

The bottom wall 10 of the lower rail 2 comprises a through-going opening 14 in a position below the wider flange 12A. This opening 14 is configured to allow a fixed mounting of one end of the strip 3. This will be further described below. The lower rail 2 is preferably formed by pressed sheet metal.

Now turning to Fig. 2. The strip 3 is formed as a longitudinally extending body. The strip 3 is formed by sheet metal. The strip 3 has a first leg 15A, a second leg 15B and a curved portion 15C intermediate and connecting with the first and second legs 15A, 15B. The curved portion 15C has a curvature of substantially 180 degrees, whereby the first and second legs 15A, 15B have a substantially parallel extension. A free end of the first leg 15A forms a first end 16A of the strip 3. A free end of the second leg 15B forms a second end 16B of the strip 3. The first and the second ends 16A, 16B of the strip 3 have a respective through-going opening 17A, 17B allowing the strip 3 to be fixedly connected to the upper rail 1 and the lower rail 2 respectively.

Fig. 1 discloses the normal design of the strip 3, i.e., in its normal operation. The first leg 15A is substantially shorter than the second leg 15B. Further, the second end 16B of the strip 3 is disclosed as being bent so that it extends substantially in the same plane as the first leg 15A.

The second leg 15B has, starting from the second end 16B, a first portion 18 with a constant width and constant cross-sectional area as seen along the longitudinal extension of the strip 3. The first portion 18 merges with a tapered portion 19 that tapers in a direction towards the curved portion 15C of the strip 3. Hence, the tapered portion 19 is arranged adjacent the curved portion 15C as seen in a normal operation of the load absorption device 100. The normal operation condition should in the context of the invention be understood as in a condition when the load absorption device 100 is not subjected to a crash.

The tapered portion 19 is disclosed as having a first tapered portion 19A adjacent the curved portion 15C with a first tapering angle α1 in view of a longitudinal centerline of the strip 3, and a second tapered portion 19B with a second tapering angle α2 in view of the longitudinal centerline. The second tapering angle α2 is larger than the first tapering angle α1. The first tapering angle α1 may as a non-limiting example be in the range of 1-10 degrees whereas the second tapering angle α2 may be in the range of 10-30 degrees. The skilled person realizes that the tapered portion may have a uniform angle along its full length. No matter angle, the cross-sectional area of the strip increases progressively along the tapered portion 19.

The tapered portion 19 is disclosed as having the same tapering along two opposing longitudinally extending edge portions of the strip 3. The strip 3 is accordingly symmetrical along the longitudinal centerline of the strip 3.

The tapered portions 19, 19A, 19B are disclosed as having a straight-linear longitudinal extension. The skilled person realizes that other geometries may be used, such as a single-curved longitudinal extension. The single-curved extension is preferably concave as seen in view of a longitudinal centerline of the strip 3. In yet another embodiment, the strip may have a step-shaped configuration with a progressively increased cross-sectional area along the longitudinal extension of the strip.

Now turning to Fig. 1 anew. The strip 3 is configured to be fixedly connected to the upper and lower rails 1, 2 via the first and second ends 16A, 16B of the strip 3. The first end 16A of the strip 3, closest to the curved portion 15C as seen in the normal operation of the load absorption device, is configured to be fixedly connected to the bottom wall 10 of the lower rail 2. This is made by a non-disclosed fixing member, such as a screw or a rivet, that extends through the opening 14 in the bottom wall 10 in the lower rail 2 and the through-going opening 17A in the first end 16A of the strip 3.

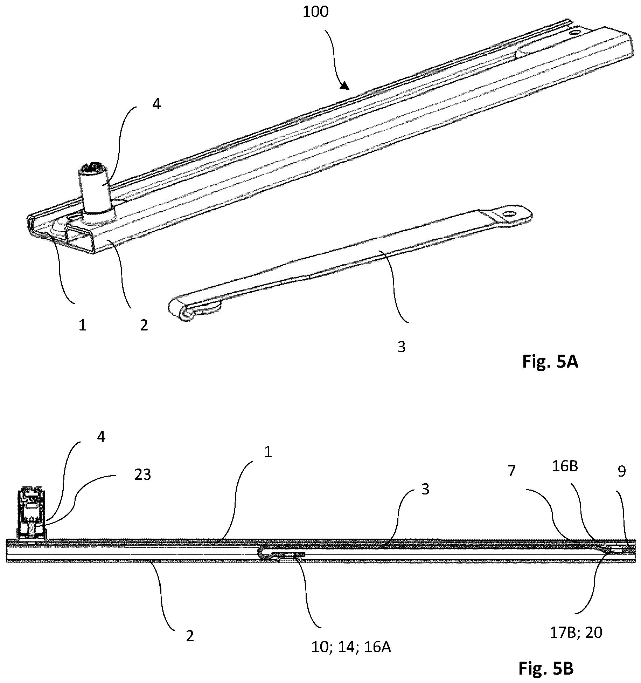

The second end 16B of the strip 3 is configured to be fixedly mounted to the second end of the upper rail 1 and more precisely to the strip-supporting flange 7. The strip 3 is oriented so that the bent portion of the strip 3 is arranged on a downwardly projecting wall portion of the depression 9. The fixation of the strip 3 to the upper rail 2 is made by a non-disclosed fixing member, such as a screw or a rivet, that extends through an opening 20 in the strip-supporting flange 7 in the upper rail 1 and the through-going opening 17B in the second end 16B of the strip 3. The position of the strip 3 when mounted may by way example be seen in Fig. 5B.

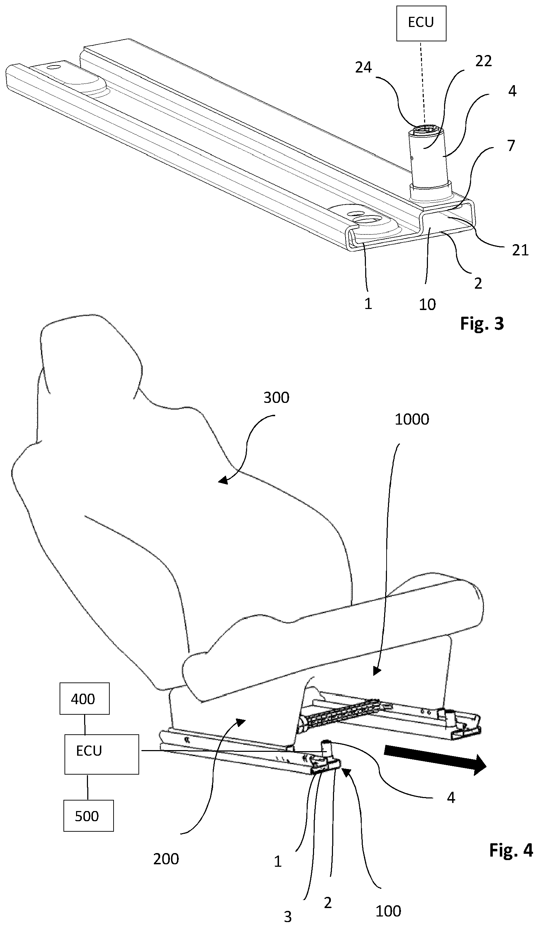

Now turning to Fig. 3, one embodiment of the load absorption device 100 is disclosed in its normal condition before mounted to a vehicle. As can be seen from this disclosure, the strip 3 will be received in an interspace 21 between a downwardly projecting wall portion of the strip-supporting flange 7 of the upper rail 1 and the bottom wall 10 of the lower rail 2. The strip 3 will be concealed.

The locking arrangement 4 projects away from the flange of the lower rail 2. The locking arrangement 4, see Fig. 1 in combination with Fig. 3, comprises an unlocking element 22 and a locking pin 23. The unlocking element 22 may be an electromechanical unlocking element, an electromagnetic unlocking element or a pyrotechnical unlocking element. The unlocking element 22 is connected to the locking pin 23. The locking arrangement 4 is mounted to the rails 1, 2 so that the locking pin 23 engages the upper rail 1 and the lower rail 2 by extending through the respective openings 8, 13 in the two rails 1, 2. The locking pin 23 will thereby prevent a displacement between the upper and lower rails 1, 2. The locking pin 23 will be retracted from the openings 8, 13 upon an activation of the unlocking element 22. This will be further discussed below.

The locking arrangement 4 comprises, as is best seen in Fig. 3, a connecting interface 24 to allow the locking arrangement 4 to be connected to an ECU (Electrical Control Unit) of the vehicle.

Now turning to Fig. 4. This illustration discloses, highly schematically, the connection between a seat frame 200 and the load absorption device 100. The load absorption device 100 is configured to be connected to a lower portion of the seat frame 200 via the upper rail 1 of the load absorption device 100. The lower rail 2 is in turn configured to be connected to the floor of the vehicle. The lower rail will be fixedly mounted. The floor and hence the fixation has been omitted to facilitate understanding. The connection of the lower rail 2 to the floor may be made by any suitable, non-disclosed fixing means, such as bolts or the like.

Now turning to Figs. 5A and 5B, the operation of the load absorption device will be discussed. Fig. 5A discloses a perspective view of the load absorption device 100 with the strip 3 as a stand-alone unit to better illustrate its shape. Fig. 5B is a cross section of the load absorption device 100 along its longitudinal extension the moment just after a deployment of the locking arrangement 4, but before mutual displacement of the rails 1, 2. As is best seen in Fig. 5B, the deployment of the locking arrangement 4 has caused the locking pin 23 to release its engagement with the through-going holes in the upper and lower rails 1, 2. This allows the two rails 1, 2 to be mutually displaced.

Fig. 5B clearly discloses how the strip 3 is mounted between the rails 1, 2. The second end 16B of the strip 3 is fixedly mounted to the second end of the upper rail 1 and more precisely to the strip-supporting flange 7. The strip 3 is oriented so that the bent portion of the strip 3 is arranged on a downwardly projecting wall portion of the depression 9. The fixation of the strip 3 to the upper rail 1 is made by a non-disclosed fixing member, such as a screw or a rivet, that extends through an opening 20 in the strip-supporting flange 7 in the upper rail 1 and the through-going opening 17B in the second end 16B of the strip 3. Correspondingly, the first end 16A of the strip 3 is fixed to the bottom wall 10 of the lower rail 2 by a non-disclosed fixing member extending through the through-going opening 14. The strip 3 may alternatively be welded to the rails 1, 2.

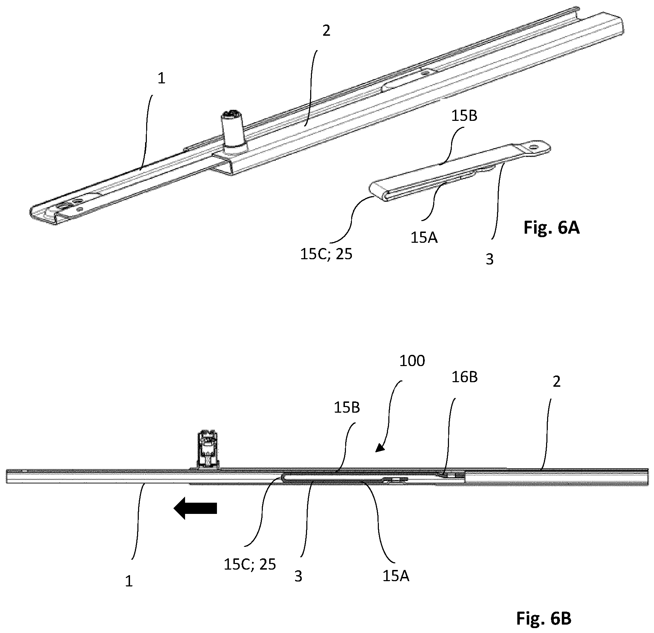

Now turning to Figs. 6A and 6B, the two rails 1, 2 have been mutually displaced so that the upper rail 1 has been displaced a distance corresponding to roughly half of the length of the lower rail 2. As is best seen in Fig 6B which is a cross section of the device 100 along its longitudinal extension, the first end of the strip 3 that is connected to the lower rail 2 is stationary due to the fixation of the lower rail to the floor (not shown) of the vehicle. The second end 16B of the strip 3 that is fixed to the upper rail 1 that is displaced, as a result of a forward movement of a seat (not shown), moves along with the upper rail 1. This mutual displacement between the rails 1, 2 causes the curved portion 15C of the strip 3 to translate in the same direction as the upper rail 1, see arrow. The convex portion 25 of the curved portion 15C will thereby constitute a leading edge during the mutual displacement between the upper and lower rails 1, 2.

Also, as is best seen in Fig. 6A, the relative length of the first leg 15A and the second leg 15B of the strip 3 has been changed. The first leg 15A has become longer while the second leg 15B has become shorter. This ratio is due to the translation of the curved portion 15C.

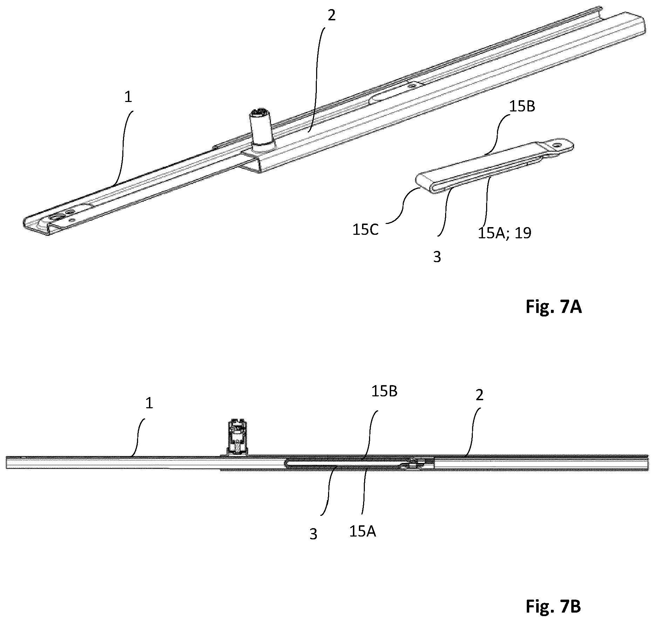

Now turning to Figs. 7A and 7B, the two rails 1, 2 have been mutually displaced to such degree at the inertial force has been fully absorbed by the strip 3. The upper and lower rails 1, 2 have been more or less displaced the full available length of the strip 3. The curved portion 15C of the strip 3 has been forced to translate to such extent that the first and second legs 15A, 15B of the strip 3 have more or less the same length. The skilled person realizes that the degree of translation of the curved portion 15C depends on the specific crash situation and the progression of the increase of the cross-sectional area as seen along the tapered portion of the strip 3. This will be further discussed below.

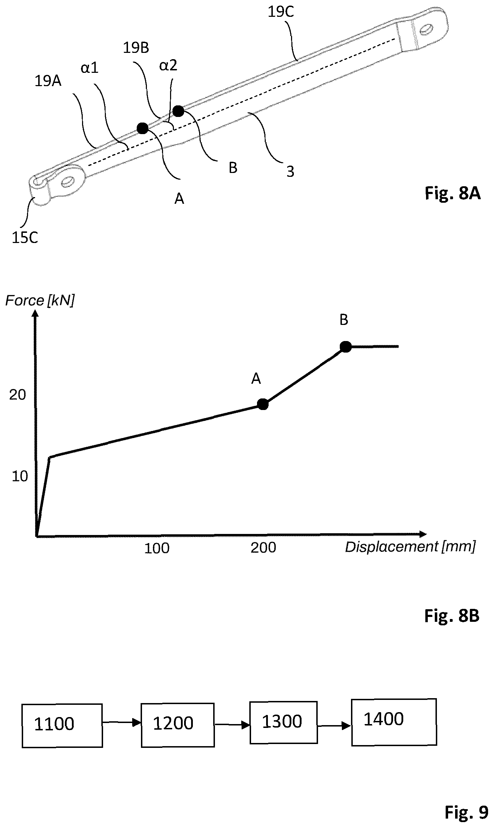

Now turning to Figs. 8A and 8B. Fig. 8A discloses one example of a strip 3 with two subsequent tapered portions. The first tapered portion 19A has a first tapering angle α1 in view of the longitudinal centerline of the strip 3. The second tapered portion 19B has a second tapering angle α2 in view of the longitudinal centerline of the strip 3. The second tapering angle α2 is larger than the first tapering angle α1. The first tapered portion 19A is arranged adjacent the curved portion 15C as seen in the normal operation condition of the strip 3. Fig. 8B is a graph that discloses the absorbed force versus the displacement between the upper and lower rails and hence the translation distance of the curved portion 15C during such displacement. Point A in the graph indicates a displacement between the rails where the curved portion 15C has been translated to such extent that it reaches the position where the first tapered portion 19A merges with the second tapered portion B. Equally, point B in the graph indicates a displacement between the rails where the curved portion 15C has been translated to such extent that it reaches the position where the second tapered portion 19B merges with the portion 19C of the strip 3 that has a uniform width. As can be seen from the graph, the geometry of the strip with its progressively increasing cross-sectional area as seen along the longitudinal extension of the strip allows a progressive absorption of the load and hence a progressive absorption of energy from a crash.

Although the graph illustrates the performance of a strip with two tapered portions merging with a straight portion with a uniform width and hence uniform cross-sectional area, the same principle applies to other strip geometries, i.e., for strips having other geometries as seen along their longitudinal extensions. The wider strip and hence larger cross-sectional area, the more energy is required to deform the strip, and hence a higher load absorption.

Now turning to Fig. 4 anew, the practical operation of the load absorption device 100 as part of a vehicle occupant protection system 1000 will be described. The system 1000 comprises a vehicle seat 300 that is configured to accommodate an occupant (omitted). The occupant can set the inclination of the back rest and also move the seat back and forth to a comfortable position. The seat frame 200 is connected to two load absorption devices 100 of the type that has been describe above. The fixation of the devices 100 to the floor may be made e.g., by bolting.

Each load absorption device 100 comprises a locking arrangement 4 that is configured to selectively lock the vehicle seat in a defined seating position to prevent mutual displacement between the rails 1, 2 in the load absorption device 100 when locked and to allow displacement between the rails 1, 2 when unlocked. The locking arrangement 4 is preferably as a default set to a locked position during the normal operation of the vehicle. The rails 1, 2 are thereby prevented from a mutual displacement during the normal operation of the vehicle.

The system 1000 comprises at least one crash sensor element 400 that is adapted for determining an imminent or ongoing vehicle crash. The system further comprises a seating position sensor element 500 adapted for determining a seating position. The sensor 500 may by way of example determine the inclination of the back rest and the position of the seat in view of the dashboard or steering wheel. These types of sensors are well known in the art and are not further discussed.

The sensors 400, 500 and locking arrangements 4 are in turn arranged to communicate with an ECU (Electrical Control Unit) of the vehicle. In the event a processor of the ECU, based on signals from the crash sensor element 400 determines that there is an imminent or an ongoing vehicle crash, and that the seating position sensor element 500 indicates that the seating is set to a certain position where there is a risk for a submarining, the ECU will instruct the locking arrangement 4 to unlock. Thereby the upper and lower rails 1, 2 will be allowed to be mutually displaced to thereby allow a load absorption by the strip 3. Another parameter that may be used as input to the ECU to determine if the locking arrangement 4 should be unlocked or not is the speed of the vehicle. If the speed is below a certain threshold value, the loads from the crash will thereby be handled by other safety systems in the vehicle.

As the crash occurs, the inertial force from the crash and the seated occupant will force the seat 300 to slide forward from the rearward seating position towards the conventional driving seating position. This sliding will be allowed by mutual displacement between the upper and lower rails 1, 2. Since the two rails are interconnected by the strip 3, the strip 3 is forced to deform and thereby absorb inertial energy of the seat and/or a seated occupant.
In short, the method, see Fig. 9, of operating the vehicle occupant protection system may be summarized as follows: determining 1100, by using a crash sensor element 400, an imminent or ongoing vehicle crash;
Determining 1200, by using a seating position sensor element 500, a seating position;
upon the determination of the seat 200 being in a rearward seating position and the occurrence of an imminent or ongoing vehicle crash:
unlocking 1300 the locking arrangement 4 to allow the sliding of the seat 200 from the rearward seating position towards a conventional driving seating position, and using 1400 inertial energy from the vehicle crash to slide the seat from the rearward seating position towards the conventional driving seating position while inertial energy of the seat and/or a seated occupant is absorbed by a deformation of the strip 3 in the respective load absorption device 100.

Accordingly, a load absorption device is provided in which the energy is absorbed by causing a deformation of a strip which is arranged in a limited interspace between two parallel rails. The rails are caused to be mutually displaced as a result of the inertial energy of the seat and/or a seated occupant in the event of a crash where the occupant is caused to move in the forward direction. The strip is oriented between the two rails so that the curved portion is configured to translate along the strip in the same direction as the upper rail during a mutual displacement between the upper rail and the lower rail. This means that the two fixed ends of the strip will be forced towards each other by a linear movement. During this translation, the relative lengths of the first and second legs will be changed, i.e. one leg will be shorter while the other leg will be longer. There will however be substantially no elongation of the strip as such. Also, the radius in the curved portion will be substantially the same during the whole translation. This allows for an efficient energy absorption of the inertial energy from the seat and the seated occupant during a crash. When used in a vehicle seat, there will be a reduced risk of submarining and also a reduced force to the spine and pelvis area.

The properties of the strip may be adapted during the design phase of the vehicle depending on parameters such as type of vehicle, type of seats in the vehicle, expected seating position during normal use, and expected weight of the average seat occupant. Non-limiting examples of properties of the strip that may be adapted are the type of material in the strip, such as tensile strength, and the cross-sectional area of the strip as seen transverse its longitudinal extension. Accordingly, all seats in one and the same vehicle may be provided with a load absorption device, but the individual devices may be equipped with different strip designs.

The strip 3 has been disclosed as a strip having a tapered shape with two tapering portions arranged one after the another and merging with a portion with constant width and hence a constant cross-sectional area. Also, the tapering portion(s) have been described as having straight-linear edge portions. The skilled person realizes that the same effect of achieving a progressively increasing cross-sectional area along the longitudinal extension of the strip may be achieved with other geometries. The edge portions may by way of example have a single-curved extension as seen along the longitudinal extension of the strip. Alternatively, the edge portions may have a step-shaped geometry. Also, one tapering portion only, or three or more tapering portions may be applied. Also, the tapering angles may be changed.

It is realized by a person skilled in the art that features from various embodiments disclosed herein may be combined with one another to provide further alternative embodiments.

## Claims

1. Load absorption device to be used with a vehicle seat, the device comprising:
a rail arrangement comprising an upper rail (1) configured to be connected to a lower side of the vehicle seat, and a lower rail (2) configured to be fixedly connected to a top surface of a vehicle floor; wherein the upper and the lower rails (1, 2) are slidingly connected to each other to allow a longitudinal mutual displacement between the upper rail (1) and the lower rail (2); and
a strip (3) having first leg (15A) having a first end (16A), a second leg (15B) having a second end (16B), and a curved portion (15C) intermediate the first and second legs, wherein the first end (16A) is fixedly connected to the lower rail (2) and the second end (16B) is fixedly connected to the upper rail (1); wherein
the curved portion (15C) is configured to translate in the same direction as the upper rail (1) during a mutual displacement between the upper rail (1) and the lower rail (2).

2. The load absorption device according to claim 1, wherein a convex portion (25) of the curved portion (15C) constitutes a leading edge during the mutual displacement between the upper rail (1) and the lower rail (2).

3. The load absorption device according to claim 1, wherein the first leg (15A) or the second leg along (15B) its longitudinal extension comprises a tapered portion (19) tapering in a direction towards the curved portion (15C).

4. The load absorption device according to claim 3, wherein the tapered portion (19) is arranged adjacent the curved portion as seen in a normal operation of the load absorption device.

5. The load absorption device according to claim 3, wherein the tapered portion (19) has the same tapering along two opposing longitudinally extending edge portions of the strip (3).

6. The load absorption device according to claim 3, wherein the tapered portion (19) has a progressively increasing cross sectional area.

7. The load absorption device according to claim 2, wherein the tapered portion (19) has a first tapered portion (19A) with a first tapering angle α1 in view of a longitudinal centerline of the strip (3), and a second tapered portion (19B) with a second tapering angle α2 in view of the longitudinal centerline of the strip (3), wherein the second tapering angle is larger than the first tapering angle.

8. The load absorption device according to any of the preceding claims, further comprising a locking arrangement (4) selectively interlocking the upper and the lower rails (1, 2).

9. A vehicle occupant protection system, comprising
a vehicle seat (200) configured to accommodate an occupant;
a load absorption device (100) according to any of claims 1-8, wherein the rail arrangement is configured to connect the vehicle seat to a vehicle floor;
a locking arrangement (4) configured to selectively lock the vehicle seat in a defined seating position to prevent mutual displacement between the rails (1, 2) in the rail arrangement when locked and to allow displacement between the rails in the rail arrangement when unlocked;
a crash sensor element (400) adapted for determining an imminent or ongoing vehicle crash; and
a seating position sensor element (500) adapted for determining a seating position; wherein, upon the determination of that the rails (1, 2) in the rail arrangement are displaced to a position where the seat is set in a rearward seating position and the occurrence of an imminent or ongoing vehicle crash, the locking arrangement (4) is configured to be unlocked, to thereby allow a mutual displacement between the rails (1, 2) and thereby allow the seat to be slid from the rearward seating position towards a conventional driving seating position; and
whereby the sliding of the seat from the rearward seating position towards the conventional driving seating position is performed by using inertial energy from the vehicle crash while the strip (3) is forced to deform and thereby absorb inertial energy of the seat and/or a seated occupant.

10. A method of operating a vehicle occupant protection system in a vehicle, the vehicle comprising:
a seat for accommodating an occupant, wherein the seat is slidably connected with the vehicle by a load absorption device (100) according to any of claims 1-8, and
wherein a locking arrangement (4) is provided which is configured to selectively lock the vehicle seat in a defined seating position to prevent mutual displacement between the rails (1, 2) in the rail arrangement when locked and to allow displacement between the rails (1, 2) in the rail arrangement when unlocked; the method comprising:
determining (1100), by using a crash sensor element (400), an imminent or ongoing vehicle crash;
determining (1200), by using a seating position sensor element (500), a seating position;
upon the determination of the seat being in a rearward seating position and the occurrence of an imminent or ongoing vehicle crash:
unlocking (1300) the locking arrangement (4) to allow the sliding of the seat from the rearward seating position towards a conventional driving seating position, and using (1400) inertial energy from the vehicle crash to slide the seat from the rearward seating position towards the conventional driving seating position while inertial energy of the seat and/or a seated occupant is absorbed by a deformation of the strip (3) in the load absorption device (100).
